# FASCICULE DE BREVET EUROPEEN

(11) **EP 2 679 841 B1**
(45) Date de publication et mention de la délivrance du brevet: **07.01.2015**
(21) Numéro de dépôt: 13002802.0
(22) Date de dépôt: 30.05.2013
(51) Int. Cl.: F16C 23/08

(54) **Dispositif d'accouplement par aboutement d'un arbre de transmission supercritique, pour l'entraînement d'un rotor de giravion notamment**
Stoßkupplungsvorrichtung einer superkritischen Übertragungswelle insbesondere zum Antrieb eines Rotors eines Drehflügelflugzeugs
Device for coupling by abutment of a supercritical transmission shaft, in particular for driving a rotorcraft rotor

(30) Priorité: 28.06.2012 FR 1201830
(43) Date de publication de la demande: 01.01.2014
(73) Titulaire: Airbus Helicopters, 13725 Marignane Cedex (FR)
(72) Inventeur: Nevers, Romain, F-13330 Pelissanne (FR); Trierweiler, Léo, F-13100 AIX EN Provence (FR); Malburet, François, F-13111 Coudoux (FR)
(74) Mandataire: GPI & Associés

(56) Documents cités:
- EP-A2- 1 191 191
- FR-A1- 2 742 727
- US-B1- 6 168 530

## Description

La présente invention est du domaine des dispositifs d'accouplement par aboutement entre deux arbres tournants, et relève plus particulièrement de tels dispositifs d'accouplement munis de dispositions permettant de réduire un déséquilibre d'un arbre supercritique entraîné en rotation.
Un tel dispositif d'accouplement est divulgeé dans le document US 6 168 530 B1.

La présente invention a pour objet un tel dispositif d'accouplement, notamment dans le cadre de l'accouplement par aboutement entre au moins deux arbres tournants procurant l'entraînement d'un rotor de giravion éloigné à distance conséquente d'une source motrice, entraînement d'un rotor arrière de giravion plus spécifiquement.

Dans le domaine des giravions, au moins un groupe de motorisation procure l'entraînement en rotation d'au moins un rotor du giravion. Le giravion comporte un rotor principal à axe sensiblement vertical, procurant au moins sa sustentation sinon aussi sa propulsion, voire encore son guidage en vol. Le giravion comporte fréquemment au moins un rotor annexe à axe sensiblement horizontal, tel que communément un rotor arrière ou plus marginalement une hélice propulsive dans le cadre d'un giravion rapide à long rayon d'action.

Les giravions sont fréquemment équipés d'une boîte de transmission principale en prise avec le groupe de motorisation du giravion. Divers rotors équipant le giravion sont entraînés en rotation à partir de cette boîte de transmission principale, par l'intermédiaire d'arbres de transmission. Il est fréquent que de tels arbres de transmission soient axialement très étendus, pour procurer un entraînement d'un rotor éloigné à distance conséquente de la boîte de transmission principale, tel qu'un rotor arrière.

Se pose alors le problème général de l'entraînement en rotation de ces rotors distants à partir du groupe de motorisation au moyen d'un tel arbre de transmission étendu. Par exemple pour un rotor arrière, l'arbre de transmission s'étend le long d'une queue du giravion, pour l'entraînement du rotor arrière depuis la boîte de transmission principale. La longueur d'extension de l'arbre de transmission est potentiellement de l'ordre de plusieurs mètres.

L'arbre de transmission est couramment monté sur une structure porteuse du giravion, et est accouplé à des arbres de liaison à ses extrémités respectives. Un arbre de liaison d'entrée est en prise avec la source motrice pour l'entraînement en rotation de l'arbre de transmission. Un arbre de liaison de sortie entraîné à partir de l'arbre de transmission, est en prise avec le rotor distant pour son entraînement en rotation, notamment par l'intermédiaire d'une boîte de transmission secondaire.

Cependant, l'environnement de l'arbre de transmission est soumis à des vibrations provoquées sous l'effet des contraintes aérodynamiques supportées en vol par la structure du giravion. De telles conditions de vol rendent délicat le soutien de l'arbre de transmission sur sa longueur par la structure porteuse du giravion, notamment par une queue du giravion dans le cas d'exemple où le rotor distant à entraîner est un rotor arrière. En outre, la masse de l'arbre de transmission n'est pas homogène sur l'étendue de sa longueur, ce qui induit notamment des balourds localisés. Par ailleurs à un seuil de vitesse de rotation, l'arbre de transmission est potentiellement mis en résonnance à une fréquence propre, induisant des vibrations structurelles de l'arbre de transmission.

Dans ce contexte, il est traditionnel de répartir le long de l'arbre de transmission des bagues d'équilibrage, des organes à déformation élastique d'amortissement des vibrations et/ou des paliers de soutien.

Il est recherché de conforter la rotation équilibrée de l'arbre de transmission sur l'ensemble de sa longueur et de le préserver au mieux des diverses vibrations auxquelles il est soumis. Cependant, de telles solutions impliquent l'utilisation d'un nombre important de pièces pour le montage de l'arbre de transmission sur le giravion. Des coûts conséquents de fabrication et de maintenance du giravion sont induits, coûts qu'il est souhaitable de réduire. En outre, un tel nombre important de pièces est générateur d'un accroissement du poids du giravion, ce qui est à éviter dans le domaine de l'aéronautique.

Une solution avantageuse consiste à exploiter un arbre souple supercritique pour former l'arbre de transmission. L'utilisation d'un arbre de transmission supercritique permet notamment d'éviter le montage de l'arbre de transmission sur la structure du giravion par l'intermédiaire des différents paliers et organes d'amortissement traditionnellement répartis sur la longueur de l'arbre de transmission.

Cependant, l'utilisation d'un arbre de transmission supercritique implique d'avoir à prendre en compte sa déformation entre des noeuds alignés sur son axe d'extension naturel au repos, et plus particulièrement sa déformation en débattement angulaire entre ses extrémités en prise sur les arbres de liaison.

Se pose alors des difficultés d'accouplement par aboutement de l'arbre de transmission supercritique avec les arbres de liaison. Un tel accouplement doit procurer une rotation au mieux équilibrée de l'arbre de transmission. Une transmission de couple optimisée entre l'arbre de transmission et les arbres de liaison doit être favorisée. Il doit aussi être pris en compte non seulement le débattement angulaire de l'arbre de transmission supercritique par rapport aux axes des arbres de liaison, mais aussi de potentiels désalignements angulaires, désalignements radiaux et/ou écarts axiaux entre les arbres.

Pour procurer une transmission de couple optimisée, les moyens à transmission de couple entre l'arbre de transmission et les arbres de liaison sont traditionnellement robustes. De tels moyens à transmission de couple robustes sont couramment du type par cannelures, organes crantés ou dentés, ou autres moyens de prise radiale robustes analogues.

Dans le cadre d'un arbre de transmission supercritique, il est prévu des modalités de jonction souple de l'arbre de transmission supercritique avec les arbres de liaison. Une telle jonction souple permet d'éviter, malgré une déformation de l'arbre de transmission supercritique entre ses extrémités, un grippage voire un blocage en fonctionnement des moyens à transmission de couple robustes traditionnellement utilisés. Par exemple, un organe flexible d'aboutement est interposé entre l'arbre de transmission et un arbre de liaison. Un tel organe flexible procure une mobilité en débattement angulaire de l'arbre de transmission par rapport aux arbres de liaison. Un tel organe flexible est par exemple agencé en platine composée de lamelles juxtaposées, ladite platine étant placée en prises radiales opposées respectivement sur l'arbre de transmission et sur un arbre de liaison.

Il est plus spécifiquement pris en considération par la présente invention la gestion des débattements angulaires de l'arbre de transmission par rapport à l'axe d'extension des arbres de liaison. Un montage souple entre l'arbre de transmission et les arbres de liaison autorise un tel débattement angulaire, qu'il est néanmoins recherché d'amortir. Un arbre de transmission supercritique est couramment soutenu à ses extrémités par un palier à roulements porté par une structure porteuse, et des moyens de mobilité et d'amortissement en débattements angulaires de l'arbre de transmission supercritique sont interposés entre la structure porteuse et l'arbre de transmission.

D'une manière générale, les solutions utilisées dans le domaine des arbres de transmission supercritiques exploitent des moyens d'amortissement en déformation en flèche de l'arbre de transmission. De tels moyens d'amortissement mettent par exemple en oeuvre des structures articulées réparties le long de l'arbre de transmission et aptes à amortir les déformations en flèche de l'arbre de transmission par rapport aux axes de rotation des arbres de liaison. Si de telles structures articulées présentent l'avantage d'être peu coûteuses et légères, elles présentent néanmoins les inconvénients d'être sujettes à un vieillissement rapide et de nécessiter leur implantation en pluralité le long de l'arbre de transmission, avec pour conséquence un alourdissement inopportun du giravion.

Il est en conséquence nécessaire de prévoir des dispositions de montage et d'exploitation de dits moyens d'amortissement, qui tendent à procurer une fiabilité durable et une précision de l'amortissement des déformations de l'arbre de transmission supercritique en évitant d'alourdir le giravion.

Il est plus particulièrement à considérer que les dispositions de montage et d'amortissement des déformations d'un arbre de transmission supercritique, déformations en dit débattement angulaire notamment, tendent à complexifier et à alourdir outre mesure la structure globale du dispositif d'accouplement par aboutement entre l'arbre de transmission et les arbres de liaison. De telles structures complexes et lourdes sont notamment à éviter dans le domaine de l'aéronautique et ne simplifient pas leur maintenance.

Il est aussi nécessaire de veiller à ce que les dispositions de montage et d'amortissement des débattements angulaires de l'arbre de transmission supercritique, ne portent pas atteinte à la pérennité des organes de la structure du dispositif d'accouplement et évitent de complexifier cette structure. Les dispositions de montage et d'amortissement des débattements angulaires de l'arbre de transmission supercritique, ne doivent pas affecter ni la structure ni le fonctionnement propres d'organes exploités conjointement pour l'accouplement de l'arbre de transmission avec les arbres de liaison, pour l'amortissement des débattements angulaires de l'arbre de transmission, voire encore pour le guidage et la rotation équilibrée de l'arbre de transmission sur la structure porteuse.

Pour connaître un environnement technologique proche de la présente invention, on pourra se reporter aux documents US3425239 (BOEING Co), FR2962176 (TURBOMECA), EP0722544 (MINNESOTA MINING & MFG) et EP2367268 (BELL HELICOPTER TEXTRON Inc.).

Le but de la présente invention est de proposer un dispositif d'accouplement à montage souple par aboutement entre un arbre de transmission supercritique et des arbres de liaison entre lesquels l'arbre de transmission est interposé. Un tel dispositif d'accouplement de la présente invention comprend notamment des moyens d'accouplement en débattement angulaire entre l'arbre de transmission et les arbres de liaison, et des moyens d'amortissement des déformations de l'arbre de transmission mis en rotation, déformations en débattement angulaire notamment.

Il est plus particulièrement visé par la présente invention de proposer un tel dispositif d'accouplement procurant un amortissement du débattement angulaire entre les dits arbres dans le contexte des contraintes et difficultés à surmonter qui ont été précédemment énoncées, notamment dans le cadre de l'entraînement d'un rotor de giravion distant d'une source motrice, rotor arrière ou hélice propulsive plus spécifiquement.

Le dispositif d'accouplement de la présente invention est un dispositif d'accouplement par aboutement entre un arbre de transmission supercritique et des arbres de liaison entre lesquels l'arbre de transmission est interposé.

Le dispositif d'accouplement de la présente invention est notamment structuré pour équiper un giravion. Dans ce contexte, l'arbre de transmission est abouté entre ses extrémités à un arbre de liaison d'entrée en prise sur une source motrice du giravion, et à un arbre de liaison de sortie en prise sur un rotor du giravion. Ledit rotor est par exemple indifféremment un rotor arrière ou une hélice propulsive.

Le dispositif d'accouplement de la présente invention comprend des moyens d'accouplement par aboutement souple des extrémités de l'arbre de transmission, respectivement avec l'un et l'autre des arbres de liaison. Les moyens d'accouplement procurent, autour de centres de mobilité, une liberté de mouvement en débattement angulaire de l'arbre de transmission vis-à-vis des axes de rotation des arbres de liaison.

Le dispositif d'accouplement de la présente invention comprend encore des moyens d'amortissement de la mobilité en débattement angulaire de l'arbre de transmission, vis-à-vis de l'axe des arbres de liaison.

Le dispositif d'accouplement de la présente invention comprend aussi au moins un palier, comportant une cage de logement d'au moins un organe de roulement. Le dit palier forme notamment un palier de montage de l'arbre de transmission à l'une de ses extrémités sur une structure porteuse. Le dit au moins organe de roulement est placé en interposition entre l'arbre de transmission et la structure porteuse.

Selon la présente invention, un tel dispositif d'accouplement est principalement reconnaissable en ce que les moyens d'amortissement comportent au moins un couple d'organes de friction à portée sphérique, incorporés dans un dit palier et placés en appui l'un vers l'autre par l'intermédiaire de surfaces de friction respectives, en frottement sec notamment. Un premier organe de friction est en prise solidaire avec la structure porteuse, et un deuxième organe de friction est en prise solidaire avec ladite cage. Ladite cage est elle-même en prise sur l'arbre de transmission, en accompagnement de son mouvement en débattement angulaire.

Les mouvements en débattement angulaire de l'arbre de transmission entraîné en rotation, sont amortis à partir des frottements des organes de friction en appui l'un vers l'autre. La prise d'appui des organes de friction l'un vers l'autre est susceptible d'être une prise d'appui directe l'une contre l'autre des surfaces de friction propres aux organes de friction, ou une prise d'appui indirecte procurée par l'intermédiaire d'un matériau de friction interposé entre les surfaces de friction propres aux organes de friction, tel que visé plus loin.

Les moyens d'amortissement sont notamment incorporés à chacun de paliers de soutien de l'arbre de transmission à chacune de ses extrémités. De tels paliers d'extrémité sont avantageusement exploités pour l'accouplement par aboutement de l'arbre de transmission avec les arbres de liaison. Les organes de friction sont aptes à être de structure simple, robuste et légère, leur incorporation au palier n'induisant pas une complexification ni un alourdissement conséquent de la structure du palier.

L'amortissement par friction procuré par l'intermédiaire des organes de friction placés en appui l'un contre l'autre, directement ou indirectement, est exempté des éventuels aléas de résultats et du vieillissement rapide potentiellement induits par l'exploitation de moyens à déformation élastique, sinon à complexifier la structure du dispositif d'amortissement pour pallier à de tels aléas de résultats et de vieillissement rapide.

La mobilité en débattement angulaire de la cage en accompagnement du mouvement en débattement angulaire de l'arbre de transmission, préserve le ou les organes de roulement qu'elle loge de toute contrainte susceptible d'affecter le fonctionnement des organes de roulement et de porter atteinte au guidage en rotation de l'arbre de transmission sur la structure porteuse.

La mobilité relative des organes de friction l'un par rapport à l'autre, est limitée au mouvement de débattement angulaire relatif entre la cage logeant les organes de roulement et la structure porteuse. L'efficacité de l'amortissement obtenu par friction est renforcée et les moyens de montage en rotation de l'arbre de transmission sur les paliers sont préservés. Les contraintes auxquelles sont soumis les organes de friction sont restreintes à celles nécessaires à la fonction d'amortissement des débattements angulaire de l'arbre de transmission qui leur est dédiée.

Il est à considérer que la simplicité de structure du dispositif d'amortissement permet de faciliter l'implantation dans un dit palier des moyens d'amortissement et des moyens d'accouplement, en définissant un même centre de mise en mobilité relative d'une part entre un arbre de liaison et l'arbre de transmission, et d'autre part entre l'un et l'autre des organes de frictions, et cela y compris dans un contexte avantageux rendu possible selon lequel les organes structurels formant respectivement les moyens d'accouplement et les moyens d'amortissement sont structurellement dissociés.

Plus particulièrement et selon une forme avantageuse de réalisation, pour un palier donné que comprend le dispositif d'amortissement, le centre géométrique de définition des dites surfaces de friction à portée sphérique et un dit centre de mobilité sont confondus.

De telles dispositions sont notamment aménagées pour chacun des paliers exploités pour le montage de l'arbre de transmission sur la structure porteuse à chacune de ses extrémités. Une relation géométrique étroite est établie entre un dit centre de mobilité en débattement angulaire de l'arbre de transmission, et un dit centre géométrique à partir duquel sont définies les surfaces de friction procurant directement l'amortissement des débattements angulaires de l'arbre de transmission, et cela y compris dans le cadre avantageux d'une dissociation de structure entre les moyens d'aboutement et les moyens d'amortissement.

Plus particulièrement, les moyens d'accouplement et les moyens d'amortissement sont avantageusement dissociés en ensembles respectifs d'organes. Les organes que comportent individuellement les dits ensembles sont de préférence des organes distincts de l'un à l'autre des ensembles. Une telle séparation de structure entre les moyens d'accouplement et les moyens d'amortissement permet de simplifier et d'alléger la structure du ou des paliers de montage de l'arbre de transmission à ses extrémités sur la structure porteuse. De telles dispositions permettent notamment de préserver une quelconque de ces structures des contraintes auxquelles est soumise l'autre structure.

La cage est de préférence rendue solidaire de l'arbre de transmission en débattement angulaire par l'intermédiaire de moyens de jonction comprenant au moins un dit organe de roulement.

L'organe de roulement est monté solidaire en débattement angulaire avec l'un et l'autre de la cage et de l'arbre de transmission. Un tel montage solidaire de l'organe de roulement est notamment réalisé par l'intermédiaire de bagues qu'il comporte communément, et qui logent entre elles des éléments de roulement, tels que des billes ou éléments de roulement analogues.

Plus particulièrement, une dite bague extérieure de l'organe de roulement est solidaire de la cage, et une dite bague intérieure de l'organe de roulement est solidaire de l'arbre de transmission. Les éléments de roulement interposés entre les dites bagues sont préservés de toutes contraintes induites par le débattement angulaire de l'arbre de transmission afin de ne pas affecter leur fonctionnement ni leur pérennité. L'organe de roulement est avantageusement exploité pour créer une mise sous dépendance en débattement angulaire entre la cage et l'arbre de transmission, sans affecter son fonctionnement au regard du roulement autorisé en liberté de rotation relative entre la cage et l'arbre de transmission.

Selon une forme préférée de réalisation, les dits organes de friction sont équipés de moyens de serrage en appui l'un vers l'autre. De tels moyens de serrage sont potentiellement de structure simple, et sont avantageusement du type courant à réglage d'effort de serrage, procurant un serrage ajustable des organes de friction l'un vers l'autre.

De tels moyens de serrage sont par exemple du type par boulonnage, par bridage ou technique analogue de prise d'appui conjointe contre les organes de friction pour l'application des surfaces de friction l'une vers l'autre. De tels moyens de serrage permettent de régler facilement et précisément les efforts d'appui que prennent les surfaces de friction l'une vers l'autre, directement l'une contre l'autre ou indirectement par l'intermédiaire d'un matériau de friction interposé entre elles.

Les moyens de serrage comportent potentiellement des moyens élastiquement déformables de mise en compression des organes de friction l'un vers l'autre. Les dits moyens élastiquement déformables sont placés par les moyens de serrage sous contrainte permanente à un seuil de contrainte prédéterminé. De tels moyens élastiquement déformables, associés aux moyens de serrage, permettent de régler aisément l'effort d'appui des surfaces de friction l'une vers l'autre, à partir du réglage au dit seuil de contrainte prédéterminé de la contrainte à laquelle sont soumis de tels moyens élastiquement déformables.

Les dits moyens élastiquement déformables peuvent être réduits à un organe interposé entre les organes de friction et placés sous contrainte par les moyens de serrage, ou encore être réduits à un organe interposé entre deux éléments de friction, tels que des flasques, composant l'un quelconque des organes de friction et entre lesquels organes de friction est interposé l'autre organe de friction.

Selon un exemple de réalisation, la cage comporte un fût de réception de l'organe de roulement. Le dit fût est axialement prolongé par une chambre logeant les moyens d'accouplement. La paroi délimitant ladite chambre est composée de deux éléments de paroi ménageant respectivement le premier organe de friction et le deuxième organe de friction.

Selon un autre exemple de réalisation, la cage est munie d'une collerette conformée en portion de calotte sphérique. Ladite collerette forme le deuxième organe de friction, et est enserrée entre deux flasques du palier formant conjointement le premier organe de friction.

Les faces opposées de la collerette ménagent conjointement la surface de friction du deuxième organe de friction. Les faces en regard des flasques ménagent conjointement la surface de friction du premier organe de friction, en étant placées en appuis respectifs contre les dites faces opposées de la collerette. Une telle simplicité de structure permet d'agencer aisément lesdits moyens de serrage avantageusement équipés des dits moyens élastiquement déformables.

Par exemple, les moyens de serrage prennent des appuis axiaux antagonistes respectivement contre l'un et l'autre des flasques. Les moyens élastiquement déformables sont susceptibles d'être réduits à une plaquette souple plus ou moins épaisse aisément montée en interposition entre les flasques. Par exemple encore, Les moyens élastiquement déformables sont susceptibles d'être formés d'un organe élastiquement compressible interposé entre l'un des flasques et les moyens de serrage placés en prise axiale conjointe sur l'un et l'autre des flasques.

Les surfaces de friction sont susceptibles de comporter un traitement de surface à partir duquel leur est conféré leur coefficient de frottement. Un tel traitement de surface est par exemple ménagé par altération de surface, conférant aux surfaces de friction une rugosité spécifique. Un tel traitement de surface par altération ménage potentiellement des reliefs localisés, tels que micro-cuvettes ou stries, en étant par exemple réalisés par enlèvement de matière par procédé mécanique, thermique ou chimique. Ledit traitement de surface est par exemple encore réalisé par apport de matière, revêtement de surface notamment.

Selon une forme particulière de réalisation, un matériau de friction est interposé entre les surfaces de friction en appui l'une vers l'autre. Un tel matériau de friction est propre à favoriser l'amortissement par frottement des débattements angulaires de l'arbre de transmission, indépendamment du matériau choisi pour former globalement les organes de friction.

Ledit matériau de friction est par exemple sous forme pulvérulente, en étant logé dans un interstice ménagé entre les surfaces de friction, voire encore en étant logé à l'intérieur de dits reliefs formés sur les surfaces de friction. Par exemple encore, un dit matériau de friction est potentiellement noyé dans un matériau de scellement. Un tel matériau de friction est par exemple encore sous forme d'un revêtement de surface ménagé sur l'une quelconque au moins des surfaces de friction.

Selon une forme préférée de réalisation et pour un palier donné, les moyens d'accouplement sont du type à organe flexible interposé entre un arbre de liaison et une extrémité correspondante de l'arbre de transmission. Le dit organe flexible est placé en prises radiales opposées respectivement sur l'arbre de transmission et sur l'arbre de liaison. Selon une forme connue de réalisation, un tel organe flexible est agencé en platine composée de lamelles juxtaposées.

Des exemples de réalisation de la présente invention vont être décrits en relation avec les figures des planches annexées, dans lesquelles :
- la fig.1 est une représentation schématique d'une chaîne cinématique de transmission d'entraînement d'un rotor de giravion selon l'art antérieur.
- la fig.2 est une représentation schématique d'une chaîne cinématique de transmission d'entraînement d'un rotor de giravion conforme à la présente invention.
- les fig.3 et fig.4 sont des illustrations de dispositifs d'accouplement par aboutement d'un arbre supercritique avec un arbre de liaison selon divers exemples respectifs de réalisation de la présente invention.

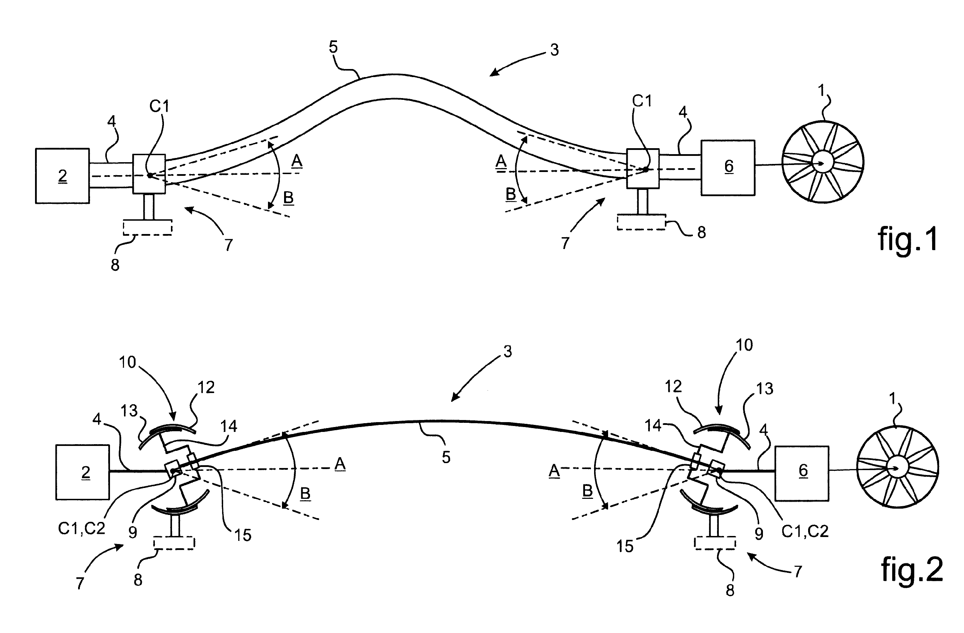

Sur les fig.1 et fig.2, un rotor 1 de giravion est entraîné en rotation à partir d'une source motrice 2. Ladite source motrice 2 est notamment une boîte de transmission principale entraînée à partir d'un groupe de motorisation équipant le giravion. Une chaîne cinématique 3 est interposée entre le rotor 1 et la source motrice 2. Ladite chaîne cinématique 3 comprend des arbres de liaison 4, entre lesquels est interposé un arbre de transmission 5 supercritique.

Plus particulièrement, un arbre de liaison 4 d'entrée est en prise sur la source motrice 2, et un arbre de liaison 4 de sortie est en prise sur le rotor 1, notamment par l'intermédiaire d'une boîte de transmission annexe 6. A titre d'exemple, le rotor 1 est plus spécifiquement un rotor arrière du giravion porté en bout d'une poutre de queue du giravion, et la boîte de transmission annexe 6 est une boîte de transmission arrière.

L'arbre de transmission 5 est accouplé par aboutement à ses extrémités avec les arbres de liaison 4. L'arbre de transmission est monté à ses extrémités sur une structure porteuse 8 du giravion par l'intermédiaire de paliers 7. L'arbre de transmission 5 étant un arbre souple supercritique, son accouplement aux arbres de liaison 4 nécessite de prendre en compte sa déformation entre ses extrémités. Il est plus particulièrement pris en compte une déformation de l'arbre de transmission 5 en débattement angulaire B par rapport aux axes de rotation A des arbres de liaison 4.

Conformément à la présente invention telle qu'illustrée sur les fig.2 à fig.4, l'arbre de transmission 5 est accouplé à l'un au moins des arbres de liaison 4 par l'intermédiaire d'un dispositif d'accouplement 9,10 par aboutement affecté à ce palier. Il doit être compris que l'arbre de transmission 5 est de préférence accouplé à chacune de ses extrémités à un arbre de liaison 4 respectif par l'intermédiaire d'un dit dispositif d'accouplement. Il est cependant à considérer que l'une quelconque des extrémités de l'arbre de transmission 5 est potentiellement dotée d'un dit dispositif d'accouplement 9,10 de la présente invention, sans préjuger de l'aménagement du montage en débattement angulaire de l'autre extrémité de l'arbre de transmission 5 sur le palier qui lui est affecté.

Les dispositifs d'accouplement 9,10 associent chacun des moyens d'accouplement 9 par aboutement souple d'une extrémité de l'arbre de transmission 5 avec un arbre de liaison 4 affecté à cette extrémité, et des moyens d'amortissement 10 de la mobilité en débattement angulaire de l'arbre de transmission 5.

Pour chacun des paliers 7, les moyens d'accouplement 9 procurent une dite mobilité en débattement angulaire B de l'arbre de transmission 5 autour d'un centre de mobilité C1. Sur la fig.2, il est illustré l'autorisation qui est faite par les dispositifs d'accouplement, d'une déformation arquée de l'arbre de transmission 5 entre ses extrémités en prises respectives sur les arbres de liaison 4.

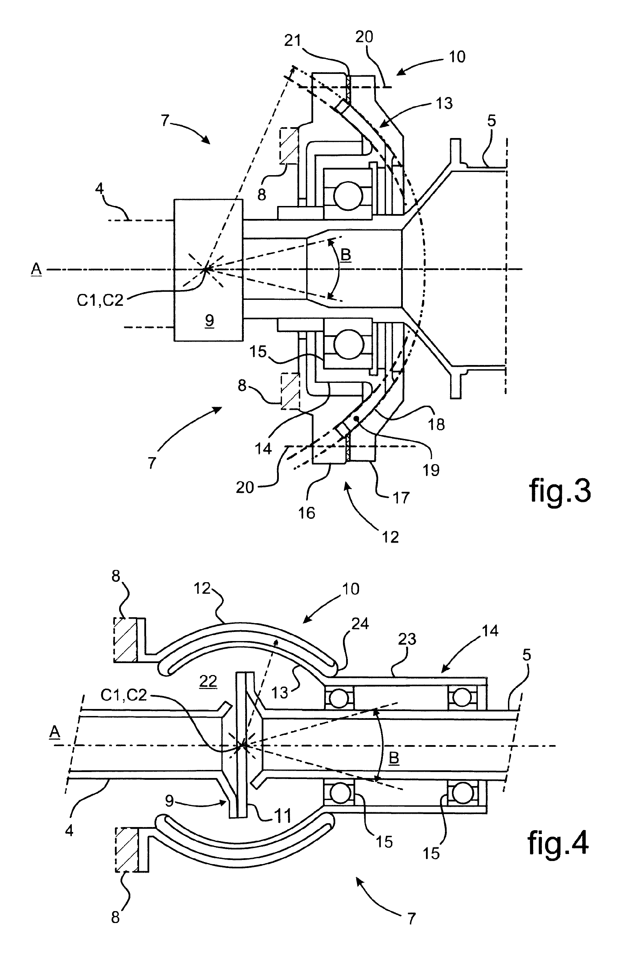

Les moyens d'accouplement 9 sont par exemple du type mettant en oeuvre un organe flexible interposé par aboutement entre un arbre de liaison 4 et l'arbre de transmission 5. Sur l'exemple de réalisation représenté sur la fig.4, un tel organe flexible 11 est avantageusement choisi du type agencé en platine composée de lamelles juxtaposées, ladite platine 11 étant placée en prises radiales opposées respectivement sur l'arbre de transmission 5 et sur un arbre de liaison 4.

Les moyens d'amortissement 10 sont du type à friction, et comprennent deux organes de friction 12,13 à portée sphérique en prise respectivement sur la structure porteuse 8 et sur une extrémité de l'arbre de transmission 5. Un premier organe de friction 12 est en prise solidaire avec la structure porteuse 8 sur laquelle il est maintenu immobile. Un deuxième organe de friction 13 est solidaire de l'arbre de transmission 5 vis-à-vis de sa mobilité en débattement angulaire B.

Les dispositifs d'accouplement sont de structure avantageusement simplifiée. Pour chacun des paliers 7, le dit centre de mobilité C1 et le centre géométrique C2 de définition des surfaces de friction des organes de friction 12,13 sont confondus. Par ailleurs, la structure des moyens d'accouplement 9 et la structure des moyens d'amortissement 10 sont dissociées. La dissociation faite pour chacun des paliers 7 entre les structures respectives des moyens d'accouplement 9 et des moyens d'amortissement 10, réside avantageusement dans la mise en oeuvre d'organes distincts entre les dites structures.

Plus particulièrement pour chacun des paliers 7, les moyens d'accouplement 9 sont axialement interposés en bout de l'arbre de liaison 4 et de l'arbre de transmission 5. Tel que précédemment visé, le premier organe de friction 12 est solidairement monté sur la structure porteuse 8. Le deuxième organe de friction 13 est ménagé sur une cage 14 ou organe analogue de logement d'au moins un organe de roulement 15. Le ou les organes de roulement 15 sont placés en interposition entre l'arbre de transmission 5 et le deuxième organe de friction 13.

La cage 14, et donc aussi le deuxième organe de friction 13, sont en prise sur l'arbre de transmission 5 par l'intermédiaire des organes de roulement 15. Les organes de roulement 15 sont exploités pour former des moyens de jonction l'un à l'autre de la cage 14 et l'arbre de transmission 5, en autorisant une mobilité relative seulement en rotation entre l'arbre de transmission 5 et la cage 14, et en procurant la liaison en débattement angulaire B entre la cage 14 et l'arbre de transmission 5. On relèvera que ces dispositions permettent non seulement de simplifier la structure des moyens d'amortissement 10, mais permettent aussi de préserver les organes de roulement 15 de sollicitations radiales excessives entre la cage 14 et l'arbre de transmission 5.

Par exemple sur la fig.3 et pour un palier 7 donné, le premier organe de friction 12 est composé d'éléments de friction formés respectivement de deux flasques 16,17 fixés l'un à l'autre et montés sur la structure porteuse 8. Les flasques 16,17 ménagent entre eux un logement 18 de réception du deuxième organe de friction 13. Ledit deuxième organe de friction 13 est placé en interposition entre les flasques 16,17, en étant par exemple formé d'une collerette 19 agencée en calotte sphérique et ménagée en prolongement radial de la cage 14. Les flasques 16,17 sont notamment fixés l'un à l'autre par des moyens de serrage 20, tels que par exemple par boulonnage, par bridage ou autres moyens de serrage analogues.

Les moyens de serrage 20 permettent de régler l'effort de friction exercé entre le premier organe de friction 12 et le deuxième organe de friction 13. Le serrage des flasques 16,17 l'un vers l'autre est réalisé suivant une direction générale coaxiale à l'arbre de liaison 4. Les moyens de serrage 20 comprennent subsidiairement des moyens élastiquement déformables 21 interposés en appuis élastiques antagonistes entre les flasques 16,17.

De tels moyens déformables sont avantageusement de structure simple, en étant par exemple formés d'une rondelle ou plaquette analogue en matière synthétique élastiquement déformable.

Par exemple encore sur la fig.4 et pour un palier 7 donné, les organes de friction 12,13 composent la paroi d'une chambre 22 logeant les moyens d'accouplement 9. La chambre 22 est axialement prolongée par un fût 23 logeant les organes de roulement 15. La paroi délimitant la chambre 22 est composée du premier organe de friction 12 et du deuxième organe de friction 13, qui sont mobiles par glissement l'un par rapport à l'autre en débattement angulaire B. L'élément de paroi de la chambre 22 formé du premier organe de friction 12 est monté sur la structure porteuse 8. L'élément de paroi de la chambre 22 formé du deuxième organe de friction 13 est porté par le fût 23.

Accessoirement, un matériau de friction 24 est interposé entre le premier organe de friction 12 et le deuxième organe de friction 13.

Selon une forme élémentaire de réalisation, un tel matériau de friction 24 est formé par un revêtement de surface ménagé sur la surface de friction de l'un au moins des organes de friction 12,13.

Selon une forme plus élaborée de réalisation, un tel matériau de friction 24 est susceptible de comprendre une masse de matériau potentiellement interposée par scellement entre le premier organe de friction 12 et le deuxième organe de friction 13. Une telle masse de matériau de friction 24 est par exemple issue d'un matériau élastomère ou matériau synthétique analogue, en étant aisément scellée sur les organes de friction 12,13 par vulcanisation ou autre méthode de scellement analogue.

Sous l'effet de la mise en rotation de l'arbre de transmission 5, le matériau de friction 24 est dans ce cas soumis à des contraintes en cisaillement génératrices de frictions internes dans la masse du matériau de friction 24, de telles contraintes étant aptes à amortir les débattements angulaires B de l'arbre de transmission 5. L'exploitation d'un tel matériau de friction 24 travaillant par frictions internes en cisaillement, n'induit pas une complexification outre mesure des moyens d'amortissement. La chambre 22 est obtenue à moindres coûts, et est facilement remplaçable après usure au cours d'une opération de maintenance.

## Revendications

1. Dispositif d'accouplement (9,10) par aboutement entre un arbre de transmission (5) supercritique et des arbres de liaison (4) entre lesquels l'arbre de transmission (5) est interposé, le dit dispositif d'accouplement comprenant :
-) des moyens d'accouplement (9) par aboutement souple des extrémités de l'arbre de transmission (5) respectivement avec l'un et l'autre des arbres de liaison (4), procurant autour de centres de mobilité (C1) une liberté de mouvement en débattement angulaire (B) de l'arbre de transmission (5) vis-à-vis des axes de rotation (A) des arbres de liaison (4),
-) des moyens d'amortissement (10) de la mobilité en débattement angulaire (B) de l'arbre de transmission vis-à-vis de l'axe des arbres de liaison (4),
-) au moins un palier (7) de montage de l'arbre de transmission (5) à l'une de ses extrémités sur une structure porteuse (8), ledit palier (7) comportant une cage (14) de logement d'au moins un organe de roulement (15) placé en interposition entre l'arbre de transmission (5) et ladite structure porteuse (8),
**caractérisé en ce que** les moyens d'amortissement (10) comportent au moins un couple d'organes de friction (12,13) à portée sphérique incorporés dans un dit palier (7) et placés en appui l'un vers l'autre par l'intermédiaire de surfaces de friction respectives, un premier organe de friction (12) étant en prise solidaire avec la structure porteuse (8) et un deuxième organe de friction (13) étant en prise solidaire avec ladite cage (14), elle-même en prise sur l'arbre de transmission (5) en accompagnement de son mouvement en débattement angulaire (B).

2. Dispositif d'accouplement selon la revendication 1, **caractérisé en ce que** pour un palier (7) donné, le centre géométrique (C2) de définition des dites surfaces de friction à portée sphérique et un dit centre de mobilité (C1) sont confondus.

3. Dispositif d'accouplement selon l'une quelconque des revendications 1 et 2,
**caractérisé en ce que** les moyens d'accouplement (9) et les moyens d'amortissement (10) sont dissociés en ensembles respectifs d'organes, les organes que comportent individuellement les dits ensembles étant des organes distincts de l'un à l'autre des ensembles.

4. Dispositif d'accouplement selon l'une quelconque des revendications 1 à 3,
**caractérisé en ce que** la cage (14) est rendue solidaire de l'arbre de transmission (5) en débattement angulaire par l'intermédiaire de moyens de jonction comprenant au moins un dit organe de roulement (15).

5. Dispositif d'accouplement selon l'une quelconque des revendications 1 à 4,
**caractérisé en ce que** les dits organes de friction (12,13) sont équipés de moyens de serrage (20) en appui l'un contre l'autre, les dits moyens de serrage (20) étant à réglage d'effort de serrage.

6. Dispositif d'accouplement selon la revendication 5,
**caractérisé en ce que** les moyens de serrage (20) comportent des moyens élastiquement déformables (21) de mise en compression des organes de friction (12,13) l'un vers l'autre, les dits moyens élastiquement déformables (21) étant placés sous contrainte permanente par les moyens de serrage (20) à un seuil de contrainte prédéterminé.

7. Dispositif d'accouplement selon l'une quelconque des revendications 1 à 6,
**caractérisé en ce que** la cage (14) comporte un fût (23) de réception de l'organe de roulement (15), le dit fût (23) étant axialement prolongé par une chambre (22) logeant les moyens d'accouplement (9), la paroi délimitant ladite chambre (22) étant composée de deux éléments de paroi ménageant respectivement le premier organe de friction (12) et le deuxième organe de friction (13).

8. Dispositif d'accouplement selon l'une quelconque des revendications 1 à 6,
**caractérisé en ce que** la cage (14) est munie d'une collerette (19) conformée en portion de calotte sphérique, ladite collerette (19) formant le deuxième organe de friction (13) et étant enserrée entre deux flasques (16,17) du palier (7) formant conjointement le premier organe de friction (12).

9. Dispositif d'accouplement selon les revendications 5 et 8,
**caractérisé en ce que** les moyens de serrage (20) prennent des appuis axiaux antagonistes respectivement contre l'un et l'autre des flasques (16,17).

10. Dispositif d'accouplement selon l'une quelconque des revendications 1 à 9,
**caractérisé en ce que** les surfaces de friction comportent un traitement de surface à partir duquel leur est conféré leur coefficient de frottement.

11. Dispositif d'accouplement selon l'une quelconque des revendications 1 à 10,
**caractérisé en ce qu'**un matériau de friction (24) est interposé entre les surfaces de friction.

12. Dispositif d'accouplement selon l'une quelconque des revendications 1 à 11,
**caractérisé en ce que** les moyens d'accouplement (9) sont du type à organe flexible (11) interposé entre un arbre de liaison (4) et une extrémité correspondante de l'arbre de transmission (5), le dit organe flexible (11) étant en prises radiales opposées respectivement sur l'arbre de transmission (5) et sur l'arbre de liaison (4).

13. Giravion équipé d'un dispositif d'accouplement selon l'une quelconque des revendications 1 à 12, l'arbre de transmission (5) étant abouté entre ses extrémités à un arbre de liaison (4) d'entrée en prise sur une source motrice (2) du giravion et à un arbre de liaison (4) de sortie en prise sur un rotor (1) du giravion.

14. Giravion selon la revendication 13, ledit rotor (1) étant indifféremment un rotor arrière ou une hélice propulsive.

## Patentansprüche

1. Stoßkupplungsvorrichtung (9, 10) zwischen einer superkritischen Übertragungswelle (5) und Verbindungswellen (4), zwischen denen die Übertragungswelle (5) angeordnet ist, wobei die Kupplungsvorrichtung aufweist:
-) Mittel (9) zum Kuppeln von Enden der Übertragungswelle (5) jeweils mit der einen und der anderen Verbindungswelle (4) durch elastisches Stoßen, welche um Beweglichkeitszentren (C1) eine Winkelauslenkungsbewegungsfreiheit (B) der Übertragungswelle (5) gegenüber den Drehachsen (A) der Verbindungswellen (4) schaffen,
-) Mittel (10) zur Dämpfung der Winkelauslenkungsbeweglichkeit (B) der Übertragungswelle gegenüber der Achse der Verbindungswellen (4),
-) mindestens ein Lager (7) für die Montage der Übertragungswelle (5) an einem ihrer Enden auf einen Trägeraufbau (8), wobei das Lager (7) eine Aufnahme (14) für mindestens ein Wälzlager (15) aufweist, die zwischen der Übertragungswelle (5) und dem Trägeraufbau (8) angeordnet ist,
**dadurch gekennzeichnet, dass** die Dämpfungsmittel (10) mindestens ein Paar von Reibungsorganen (12, 13) mit kugelförmiger Lagerfläche aufweisen, die in dem Lager (7) integriert und gegeneinander über jeweilige Reibungsflächen andrückend angeordnet sind, wobei ein erstes Reibungsorgan (12) fest mit dem Trägeraufbau (8) verbunden ist, und ein zweites Reibungsorgan (13) fest mit der Aufnahme (14) verbunden ist, die selbst mit der Übertragungswelle (5) verbunden ist, indem sie deren Winkelauslenkungsbewegung (B) mit ausführt.

2. Kupplungsvorrichtung nach Anspruch 1,
**dadurch gekennzeichnet, dass** für ein gegebenes Lager (7) das geometrische Zentrum (C2) zur Bestimmung der Reibungsflächen mit kugelförmigem Sitz und ein Beweglichkeitszentrum (C1) gleich sind.

3. Kupplungsvorrichtung nach einem der Ansprüche 1 und 2,
**dadurch gekennzeichnet, dass** die Kupplungsmittel (9) und die Dämpfungsmittel (10) in jeweilige Organgruppen getrennt sind, wobei die Organe, die die Gruppen einzeln aufweisen, Organe sind, die von der einen zur anderen Gruppe unterschiedlich sind.

4. Kupplungsvorrichtung nach einem der Ansprüche 1 bis 3,
**dadurch gekennzeichnet, dass** die Aufnahme (14) bezüglich einer Winkelauslenkung mit der Übertragungswelle (5) über Verbindungsmittel fest verbunden ist, die mindestens ein Wälzlager (15) aufweisen.

5. Kupplungsvorrichtung nach einem der Ansprüche 1 bis 4,
**dadurch gekennzeichnet, dass** die Reibungsorgane (12, 13) mit gegeneinander in Andruck stehenden Spannmitteln (20) ausgerüstet sind, wobei die Spannmittel (20) eine einstellbare Spannkraft aufweisen.

6. Kupplungsvorrichtung nach Anspruch 5,
**dadurch gekennzeichnet, dass** die Spannmittel (20) elastisch verformbare Mittel (21) zum Komprimieren der Reibungsorgane (12, 13) gegeneinander aufweisen, wobei die elastisch verformbaren Mittel (21) durch die Spannmittel (20) mit einem vorbestimmten Spannungsschwellenwert unter Spannung gesetzt werden.

7. Kupplungsvorrichtung nach einem der Ansprüche 1 bis 6,
**dadurch gekennzeichnet, dass** die Aufnahme (14) eine Aufnahmebuchse (23) des Wälzlagers (15) aufweist, wobei die Buchse (23) axial durch eine Kammer (22) verlängert ist, die die Kupplungsmittel (9) aufnimmt, wobei die Wandung, die die Kammer (22) eingrenzt, aus zwei Wandelementen zusammengesetzt ist, die jeweils das erste Reibungsorgan (12) und das zweite Reibungsorgan (13) bilden.

8. Kupplungsvorrichtung nach einem der Ansprüche 1 bis 6,
**dadurch gekennzeichnet, dass** die Aufnahme (14) mit einem Übergangsstück (19) versehen ist, das teilweise die Form einer kugelförmigen Kappe aufweist, wobei das Übergangsstück (19) das zweite Reibungsorgan (13) bildet und zwischen zwei Flansche (16, 17) des Lagers (7) geklemmt ist, die zusammen das erste Reibungsorgan (12) bilden.

9. Kupplungsvorrichtung nach den Ansprüchen 5 und 8,
**dadurch gekennzeichnet, dass** die Spannmittel (20) jeweils axial entgegenwirkend gegen den einen und den anderen der Flansche (16, 17) andrücken.

10. Kupplungsvorrichtung nach einem der Ansprüche 1 bis 9,
**dadurch gekennzeichnet, dass** die Reibungsflächen eine Oberflächenbehandlung aufweisen, durch die ihnen ihr Reibungskoeffizient vermittelt wird.

11. Kupplungsvorrichtung nach einem der Ansprüche 1 bis 10,
**dadurch gekennzeichnet, dass** ein Reibungsmaterial (24) zwischen den Reibungsflächen angeordnet ist.

12. Kupplungsvorrichtung nach einem der Ansprüche 1 bis 11,
**dadurch gekennzeichnet, dass** die Kupplungsmittel (9) vom Typ flexibles Organ (11) sind, welches zwischen einer Verbindungswelle (4) und einem entsprechenden Ende der Übertragungswelle (5) angeordnet ist, wobei das flexible Element (11) jeweils mit der Übertragungswelle (5) und der Verbindungswelle (4) in entgegengesetztem radialen Eingriff steht.

13. Drehffügelflugzeug mit einer Kupplungsvorrichtung nach einem der Ansprüche 1 bis 12, wobei die Übertragungswelle (5) zwischen ihren Enden mit einer Eingangs-Verbindungswelle (4) zusammengefügt ist, die in Eingriff mit einer Antriebsquelle (2) des Drehflügelflugzeugs steht, und mit einer Ausgangs-Verbindungswelle (4), die in Eingriff mit einem Rotor (1) des Drehflügelflugzeugs steht.

14. Drehflügelflugzeug nach Anspruch 13, wobei der Rotor (1) unterschiedslos ein Heckrotor oder ein Vortriebspropeller ist.

## Claims

1. Coupling device (9, 10) for end-to-end coupling between a supercritical transmission shaft (5) and link shafts (4) between which the transmission shaft (5) is interposed, said coupling device comprising:
-) coupling means (9) for flexible end-to-end coupling between the ends of the transmission shaft (5) and respectively with one and the other of the link shafts (4), providing freedom to move in angular deflection (B) about centres of motion (C1) for the transmission shaft (5) relative to the axes of rotation (A) of the link shafts (4),
-) damping means (10) for damping the movement in angular deflection (B) of the transmission shaft relative to the axes of the link shafts (4),
-) at least one bearing (7) for mounting the transmission shaft (5) at one of its ends on a carrier structure (8), said bearing (7) comprising a cage (14) for housing at least one rolling member (15) interposed between the transmission shaft (5) and said carrier structure (8),
**characterised in that** the damping means (10) comprise at least one pair of friction members (12,13) having spherical bearing surfaces which are incorporated in a said bearing (7) and placed to press one towards the other via respective friction surfaces, a first friction member (12) being securely engaged with the carrier structure (8) and a second friction member (13) being securely engaged with said cage (14), itself engaged on the transmission shaft (5) to accompany it in its movement in angular deflection (B).

2. Coupling device according to claim 1,
**characterised in that** for a given bearing (7), the geometrical centre (C2) defining said friction surfaces having spherical bearing surfaces coincides with a said centre of motion (C1).

3. Coupling device according to any one of claims 1 and 2,
**characterised in that** the coupling means (9) and the damping means (10) are separated into respective sets of members, the members individually making up said sets being members that are distinct in each of the sets.

4. Coupling device according to any one of claims 1 to 3,
**characterised in that** the cage (14) is secured to move in angular deflection with the transmission shaft (5) via junction means comprising at least one said rolling member (15).

5. Coupling device according to any one of claims 1 to 4,
**characterised in that** said friction members (12,13) are fitted with clamping means (20) pressing one against the other, said clamping means (20) providing an adjustable clamping force.

6. Coupling device according to claim 5,
**characterised in that** the clamping means (20) comprise elastically deformable means (21) for compressing the friction members (12,13) towards each other, said elastically deformable means (21) being put under permanent stress by the clamping means (20) at a predetermined stress threshold.

7. Coupling device according to any one of claims 1 to 6,
**characterised in that** the cage (14) comprises a cylinder (23) for receiving the rolling member (15), said cylinder (23) being extended axially by a chamber (22) housing the coupling means (9), the wall defining said chamber (22) being made up of two wall elements providing respectively the first friction member (12) and the second friction member (13).

8. Coupling device according to any one of claims 1 to 6,
**characterised in that** the cage (14) is provided with a collar (19) shaped as a portion of a spherical cap, said collar (19) forming the second friction member (13) and being clamped between two plates (16,17) of the bearing (7) that together form the first friction member (12).

9. Coupling device according to claims 5 and 8,
**characterised in that** the clamping means (20) bear axially in opposite directions respectively against one and the other of the plates (16,17).

10. Coupling device according to any one of claims 1 to 9,
**characterised in that** the friction surfaces comprise a surface treatment in order to impart their coefficient of friction thereto.

11. Coupling device according to any one of claims 1 to 10,
**characterised in that** a friction material (24) is interposed between the friction surfaces.

12. Coupling device according to any one of claims 1 to 11,
**characterised in that** the coupling means (9) are of the type comprising a flexible member (11) interposed between a link shaft (4) and a corresponding end of the transmission shaft (5), said flexible member (11) being in radially opposite engagement respectively with the transmission shaft (5) and with the link shaft (4).

13. Rotorcraft fitted with a coupling device according to any one of claims 1 to 12, the transmission shaft (5) being in end-to-end coupling at its ends with an input link shaft (4) engaging a drive source (2) of the rotorcraft and with an output link shaft (4) engaging a rotor (1) of the rotorcraft.

14. Rotorcraft according to claim 13, said rotor (1) being equally well a tail rotor or a propulsive propeller.
